(19) Europäisches Patentamt

European Patent Office

Office européen des brevets

(11) Publication number: **0 277 170 B1**

(12) **EUROPEAN PATENT SPECIFICATION**

(45) Date of publication of patent specification:
27.12.91 Bulletin 91/52

(51) Int. Cl.⁵: **G01N 21/65**, G01N 21/87, B07C 5/342

(21) Application number: **87904928.6**

(22) Date of filing: **11.08.87**

(86) International application number:
**PCT/GB87/00565**

(87) International publication number:
**WO 88/01378 25.02.88 Gazette 88/05**

(54) SEPARATION PROCESS.

(30) Priority: **20.08.86 GB 8620247**

(43) Date of publication of application:
**10.08.88 Bulletin 88/32**

(45) Publication of the grant of the patent:
**27.12.91 Bulletin 91/52**

(84) Designated Contracting States:
**AT BE CH FR GB IT LI LU SE**

(56) References cited:
**GB-A- 1 135 232**
**GB-A- 2 140 555**
**US-A- 4 323 159**
**US-A- 4 397 556**

(73) Proprietor: **DE BEERS CONSOLIDATED MINES LIMITED**
**36 Stockdale Street**
**Kimberley Cape Province (ZA)**

(72) Inventor: **BURCHELL, Steven, Paul**
**21 East Avenue Heath End**
**Farnham Surrey GU9 0RA (GB)**

(74) Representative: **Collier, Jeremy Austin Grey et al**
**J.A.Kemp & Co. 14, South Square Gray's Inn**
**London WC1R 5EU (GB)**

## Description

The present invention relates to a separation process and more particularly relates to the separation of diamonds from associated gangue.

Diamond bearing ores unlike most other ores have a very low ratio of diamond to associated waste material (known as gangue) and it can be as little as one to several million. Further, the diamond must be recovered undamaged from the ore and the presence of diamond in ores is not easily determined by chemical assay methods.

Diamonds occur in alluvial deposits or in kimberlite pipes. The ore is subjected to a series of mechanical enrichment processes involving sieving, crushing and density separation techniques to obtain a concentrate containing the diamonds, the tailings or gangue being discarded. The concentrate is then sized into a number of size ranges and passed through X-ray separators which detect the fluorescence of the diamonds (and a number of other materials) causing an air ejection system to displace the diamondiferous material from the non-diamondiferous material. The final selection of uncut diamonds is then made by hand.

Our UK patent application number 2140555A relates to a method for the separation of diamonds from associated gangue comprising the steps of passing discrete units of diamondiferous ore through a beam of laser radiation capable of causing Raman spectral activation, detecting the scattered Raman radiation by means of a detector, the detector being adapted to actuate means for separating discrete units of diamond containing ore from the discrete units of non-diamond containing gangue, and collacting the separated discrete units. The application also discloses a separator suitable for use in separating diamonds comprising a source of laser radiation, means for passing discrete units of a diamond containing ore through the beam of laser radiation, detecting means for detecting scattered Raman radiation and means for separating discrete units of high diamond content from the flow of small diamond content gangue, the separating means being triggered by the detecting means.

The present invention relates to an improved method for the separation of diamonds from associated gangue in a diamondferous material.

In known methods of diamond separation, diamondiferous material for separation is transported by an endless conveyor belt, a continuous falling stream of material being discharged from the end of the belt. The material is irradiated with X-rays or laser Raman radiation and a suitable detector is used to detect the ensuing fluorescence or reflected radiation, the output of the detector being arranged to control a device such as a compressed air nozzle to deflect the diamond containing material from the stream.

The diamondiferous material for separation is often moist or contains some water and a particular problem thereby arising is that the particles stick together or clog. They also stick to the conveyor belt. This can cause an irregular falling stream of material to occur from the end of the belt with consequent errors in the diamond separation process. Also the presence of water in the material is known to cause problems when associated with the separation of diamonds by means of an X-ray based technique.

GB-A- 1135232 discloses a process for mineral sorting, for example diamonds, whereby the minerals are conveyed as a slurry or suspension in the form of a flowing stream through X-rays which can detect the mineral because the latter is relatively transparent to X-rays.

It has been found that the addition of water to the diamondiferous material to form a slurry enables the separation of diamonds to be more effectively carried out when used in conjunction with incident laser Raman radiation.

Thus, according to the present invention there is provided a method for separating diamonds from associated gangue in a diamondiferous material comprising the steps of (a) mixing the diamondiferous material with water or a water containing solution to form a slurry, (b) passing the slurry as it is formed as a falling stream or along an inclined chute, through a beam of laser radiation of known wavelength capable of causing Raman spectral activation from a laser, (c) filtering the scattered radiation from the slurry by means of a filter adapted to remove all radiation except that characteristic of diamond, and (d) detecting the filtered radiation by means of a detector, the detector being adapted to actuate means for separating high diamond content slurry from low diamond content slurry.

By high diamond content slurry it is intended to mean slurry having a higher proportion of diamonds from the diamondiferous material than the low diamond content slurry. Thus, the high diamond content slurry may contain all the diamonds from the diamondiferous material and the low diamond content slurry would contain no diamonds. Alternatively, the high diamond content slurry may only contain a proportion of the diamonds and some diamonds may be present in the low diamond content slurry. In the latter case the low diamond content slurry may be subjected to further separation processes.

The separated high diamond content slurry can be recycled through the separator at different flow rates to enable further separation of diamonds from associated gangue.

Preferably the detecting means comprises a diode analyser which is linked to a spectrometer. Preferably a computer based assessor or microprocessor decides whether the information received by the detecting means results from the radiation impinging on a diamond. The assessor is able to compare the information with pre-determined values of say, the wavelength at which a spectral peak occurs, the peak size and the level above the background scatter. Preferably the assessor actuates a command system operating a separating means. The separating means preferably comprises an ejector capable of emitting a blast of compressed gas capable of displacing the high diamond content slurry into an adjacent collector. The use of a narrow laser beam enables both large and small samples to be analysed.

Conventional Raman spectrometers scan the scattered light, each wavelength being observed and measured sequentially. Using this scanning technique requires a time of the order of minutes to identify a specific substance such as a diamond. In the present invention it is preferred to use diode array detectors linked to an optical fibre system, the diode array detectors effectively comprising a series of detectors in line. This enables a large portion of the spectrum to be examined simultaneously and using this technique, the presence of diamonds can be determined in a time of the order of milliseconds or even faster. It is also preferred to collect the scattered radiation by use of optical fibres thereby enabling the detector and analysis system to be used remote from the diamondiferous material thereby enhancing the security and convenience of the separation process.

Preferably, the diamondiferous material is diamondiferous ore which can be concentrated diamondiferous ore obtained by known concentration techniques. It is envisaged that the diamondiferous material may also be diamondiferous ore slurry such as may be obtained from aluvial suction dredge at a mine face or from subsea mining.

It is envisaged that the invention may also be used for separating synthetic diamonds from associated material. It is intended that associated material comes within the meaning of gangue in this embodiment.

The invention will now be described by way of example only and with reference to Figures 1 to 5 of the accompanying drawings.

Figure 1 is a perspective diagram of apparatus for diamond separation using a free fall technique and using an optical fibre network for transmitting and detecting the laser radiation.

Figures 2 to 5 are schematic diagrams of apparatus for diamond separation using free fall, chute feed, split chute feed and chute having multiple ejector positions respectively.

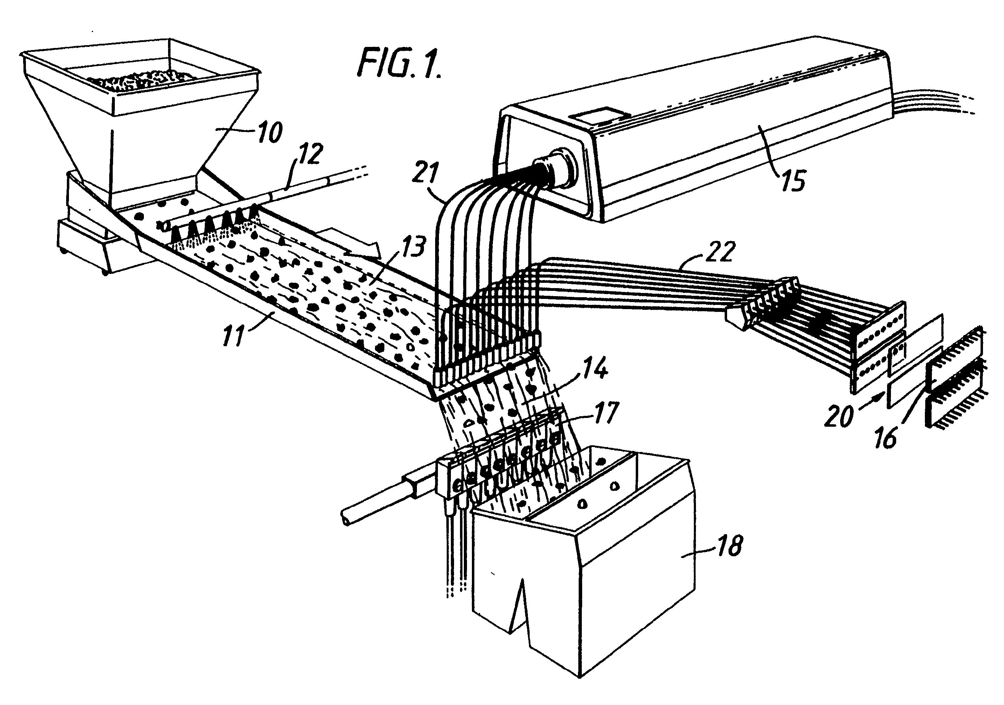

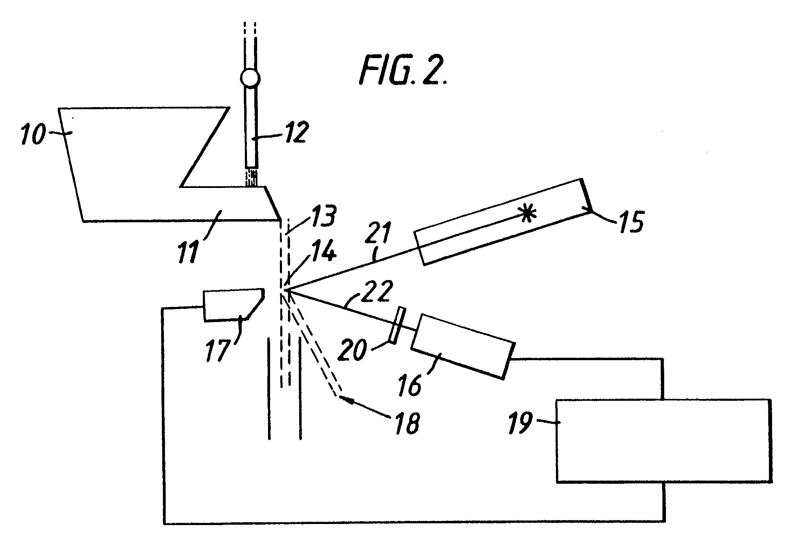

In Figures 1 and 2, a vibratory feeder 10 is arranged to pass diamondiferous ore along a chute 11 of flat cross-section. A water supply 12 passes water into the ore to form a slurry 13 passing along the chute which eventually falls freely downward from the end of the chute.

A continuous wave argon ion laser 15 capable of delivering a high power radiation of 514.5 nanometres wavelength is arranged to direct radiation into the falling slurry 14 so as to determine the presence of diamond. The laser radiation scattered by the Raman effect is filtered using filters 20 and is detected by a detector diode array 16. A compressed gas nozzle ejector 17 is located adjacent to and pointing at the falling slurry 14. An electronic microprocessor unit 19 linked to the detector is arranged to trigger the ejector so as to displace high diamond content slurry into an adjacent collector 18.

The laser radiation is taken to the falling slurry by means of a system of optical fibres 21. The scattered Raman radiation is collected by a second optical fibre system 22 and is sent to the filter/detector. The filtering system may be a narrow band pass optical filter capable of passing radiation of + or - 0.5 nanometre from the desired Raman wavelength.

During use, the ore passing from the vibratory feeder 10 into the chute 11 is mixed with water to form a slurry 13. When the slurry reaches the end of the chute it falls freely downward from the end of the chute. Laser radiation from the source 15 impinges on the falling slurry 14 and the scattered Raman radiation is collected and detected by the detector diode array 16. If scattered Raman radiation due to the presence of diamond is detected by the detector, the detector sends a signal to an electronic microprocessor unit 19 which triggers the ejector 17 causing a puff of compressed gas to displace the high diamond content slurry into an adjacent collector 18. The remaining slurry passes downwards, unaffected by the ejector 17, to a further collector.

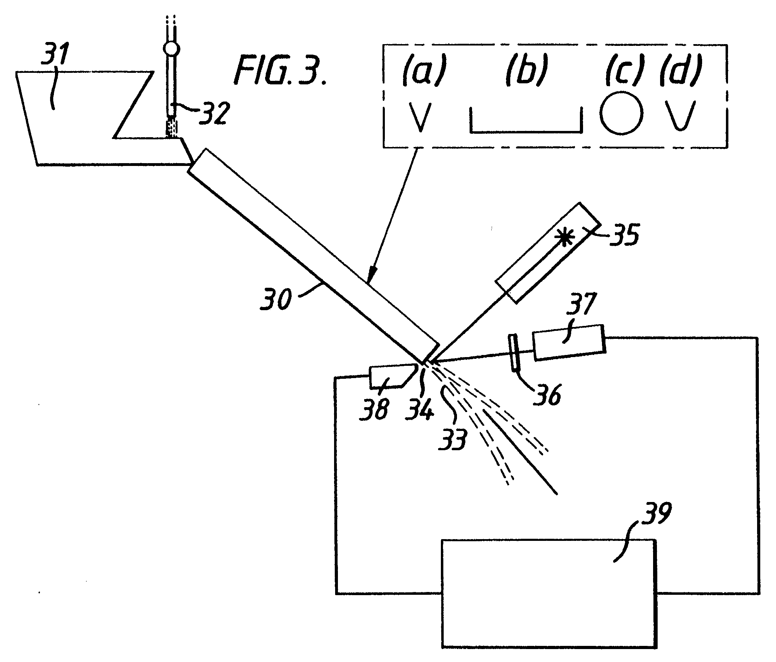

In Figure 3, a vibratory feeder 31 is arranged to pass diamondiferous ore along a chute 30 inclined at about 60° to the horizontal. A water supply 32 passes water into the ore to form a slurry 33 passing along the chute which eventually falls freely downward from the end of the chute. A continuous wave argon ion laser 35 capable of delivering a high power radiation of 514.5 namometres wavelength is arranged to direct radiation into the falling slurry 34 so as to determine the presence of diamond. The laser radiation scattered by the Raman effect is filtered using filters 36 and detected by a detector 37. A compressed gas nozzle ejector 38 is located adjacent to and pointing at the falling slurry 34. An electronic microprocessor unit 39 linked to the detector is arranged to trigger the ejector so as to displace high diamond content slurry into an adjacent collector. A number of alternative cross sections (a), (b), (c) and (d) for the chute are shown. The use of the inclined chute in combination with a water slurry enables the throughput of ore to be increased relative to a free fall arrangement.

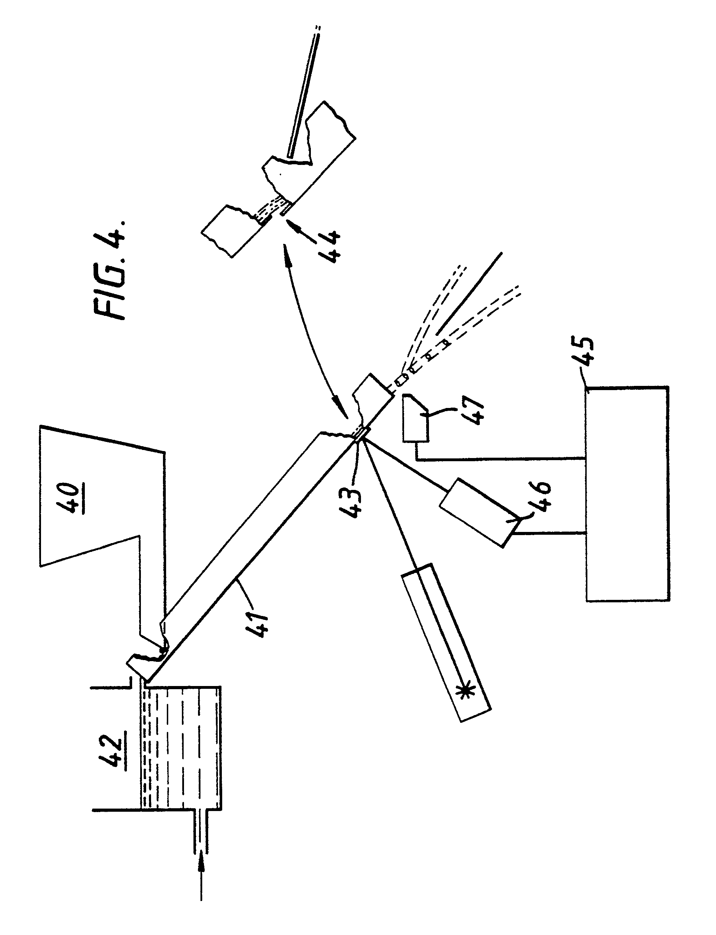

Figure 4 shows an alternative arrangement in which the slurry is formed by feeding the ore from a vibratory feeder 40 into a V-shaped chute 41, the chute being supplied with water from an adjacent weir 42. The use of this arrangement enables a more stable flow regime for the slurry to be attained. Also the chute is equipped with a transparent window 43 (or a discontinuity 44 to form a cascade) so that laser radiation can be directed at the slurry and scattered Raman radiation detected from the slurry on the chute. A suitable electronic microprocessor 45 with delay capabilities is connected to the detector system 46 to enable accurate separation to be achieved by delaying the operation of the ejector 47 until the respective slurry is falling freely from the end of the chute.

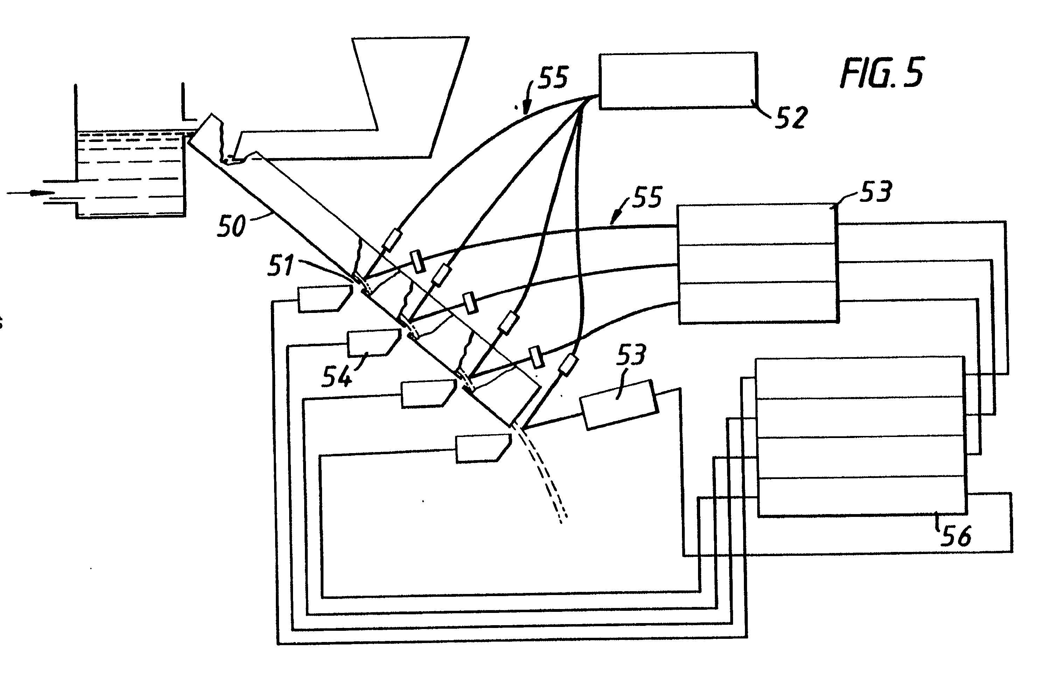

Figure 5 shows another alternative arrangement in which a plurality of separation stages can be made along a single chute 50. The chute is of broad cross section and has four cascades 51. Each cascade has a respective laser radiation supply 52, detector 53 and compressed air ejector 54. The laser, detector and ejector may be linked by an optical fibre network 55 and associated decision making electronics 56. This arrangement may be used with a high throughput of ore passing down a flat wide chute so that a coarse separation of diamonds can be obtained. Subsequently, a V-shaped chute may be used to achieve a fine separation of the diamonds.

The chutes used may be of various cross sections depending upon the throughput and the particle size of diamondiferous material. Thus, in general, a broad chute can be used for high throughput and coarse separation whereas a V-shaped chute can be used for low throughput and a fine separation. Alternative shapes of chute, say of circular or flat bottomed section, may also be used if necessary, as shown by way of example in Figure 3.

## Claims

1. A method for separating diamonds from associated gangue in a diamondiferous material comprising the steps of (a) mixing the diamondiferous material with water or a water containing solution to form a slurry (13), (b) passing the slurry as it is formed, as a falling stream (14) or along an inclined chute (11, 30, 41, 50), through a beam of laser radiation of known wavelength capable of causing Raman spectral activation from a laser (15), (c) filtering the scattered radiation from the slurry by means of a filter (20) adapted to remove all radiation except that characteristic of diamond, and (d) detecting the filtered radiation by meand of a detector (16), the detector being adapted to actuate means (17) for separating high diamond content slurry from low diamond content slurry.

2. A method according to claim 1 in which the detector comprises a diode array detector.

3. A method according to claim 1 or 2 in which the scattered radiation is collected by an optical fibre system (22) thereby enabling the detecting means to be located remote from the separating means.

4. A method according to any of the preceding claims in which the detector is linked to a computer based assessor or microprocessor (19) capable of distinguishing spectral radiation scattered from the diamondiferous material.

5. A method according to claim 4 in which the assessor is capable of actuating the separating means.

6. A method according to any of the preceding claims in which the separating means comprises an ejector using compressed gas to displace the high diamond content slurry into an adjacent collector.

7. A method according to any of the preceding claims in which separated high diamond content slurry is recycled to enable further separation of diamonds.

8. A method according to claims 1 to 7 in which the diamondiferous material comprises aluvial suction dredge.

## Patentansprüche

1. Verfahren zur Trennung von Diamanten vom zugehörigem Muttergestein in diamanttragendem Material, umfassend die folgenden Schritte: (a) Mischen des diamanttragenden Materials mit Wasser oder einer wasserhältigen Lösung zur Bildung eines Schlamms (13), (b) Leiten des Schlamms bei dessen Bildung als fallender Strom (14) oder entlang einer geneigten Rinne (11, 30, 41, 50) durch ein Laserstrahlenbündel bekannter Wellenlänge, welches die Aktivierung des Ramanspektrums von einem Laser (15) aus bewirken kann, (c) Filtern der Streustrahlung aus dem Schlamm mittels eines Filters (20) zur Entfernung sämtlicher Strahlung mit Ausnahme der für Diamanten charakteristischen, und (d) Aufspüren der gefilterten Strahlung mit einem Detektor (16), welcher Detektor eine Einrichtung (17) zum Trennen von Schlamm mit hohem Diamantgehalt von Schlamm mit niedrigem Diamantgehalt betätigen kann.

2. Verfahren nach Anspruch 1, bei welchem der Detektor einen Diodenmatrixdetektor umfaßt.

3. Verfahren nach Anspruch 1 oder 2, bei welchem die Streustrahlung durch ein optisches Fasersystem (22) gesammelt wird, wodurch es möglich ist, die Detektionseinrichtung entfernt von der Trenneinrichtung anzuordnen.

4. Verfahren nach einem der vorhergehenden Ansprüche, bei welchem der Detektor an einen Auswerter oder Mikroprozessor (19) auf Computerbasis zur Unterscheidung der vom diamanttragenden Material gestreuten Spektralstrahlung angeschlossen ist.

5. Verfahren nach Anspruch 4, bei welchem der Auswerter die Trenneinrichtung betätigen kann.

6. Verfahren nach einem der vorhergehenden Ansprüche, bei welchem die Trenneinrichtung einen Ejektor unter Einsatz von Druckgas zum Bewegen des Schlamms mit hohem Diamantgehalt in einen daneben befindlichen Sammelbehälter umfaßt.

7. Verfahren nach einem der vorhergehenden Ansprüche, bei welchem abgetrennter Schlamm mit hohem Diamantgehalt für eine weitere Absonderung der Diamanten rückgeführt wird.

8. Verfahren nach den Ansprüchen 1 bis 7, bei welchem diamanttragendes Material Schwemmsaugbaggergut umfaßt.

## Revendications

1. Procédé pour la séparation de diamants de leur gangue associée dans un matériau diamantifère comprenant les étapes consistant à : (a) mélanger le matériau diamantifère avec de l'eau ou une solution contenant de l'eau pour former une bouillie (13), (b) faire passer la bouillie telle qu'elle est formée, sous forme d'un courant en déversement (14) ou le long d'une goulotte inclinée (11, 30, 41, 50), à travers un faisceau de rayonnement laser d'une longueur d'onde connue capable de provoquer une activation spectrale Raman à partir d'un laser (15), (c) filtrer le rayonnement dispersé de la bouillie à l'aide d'un filtre (20) apte enlever tout rayonnement sauf celui caractéristique du diamant, et (d) détecter le rayonnement filtré au moyen d'un détecteur (16), ce dernier étant apte à actionner des moyens (17) pour séparer la bouillie à teneur élevée en diamant de la bouillie à faible teneur en diamant.

2. Procédé selon la revendication 1, dans lequel le détecteur comprend un ensemble de diodes de détection.

3. Procédé selon la revendication 1 ou la revendication 2, dans lequel le rayonnement dispersé est recueilli par un système à fibres optiques (22) permettant ainsi de situer les moyens de détection à une distance éloignée des moyens de séparation.

4. Procédé selon l'une quelconque des revendications précédentes, dans lequel le détecteur est relié à un dispositif d'évaluation assisté par ordinateur ou micro-processeur (19) capable de distinguer le rayonnement spectral dispersé par le matériau diamantifère.

5. Procédé selon la revendication 4, dans lequel le dispositif d'évaluation est apte à actionner les moyens de séparation.

6. Procédé selon l'une quelconque des revendications précédentes, dans lequel les moyens de séparation comprennent un éjecteur utilisant du gaz comprimé pour déplacer la bouillie à teneur élevée en diamant jusque dans un collecteur contigu.

7. Procédé selon l'une quelconque des revendications précédentes, dans lequel la bouillie à teneur élevée en diamant et qui a été séparée est recyclée pour permettre une séparation ultérieure des diamants.

8. Procédé selon les revendications 1 à 7, dans lequel le matériau diamantifère comprend de la matière alluviale obtenue par drague d'aspiration.

FIG.1.

FIG. 2.

EP 0 277 170 B1

FIG.3.

| (a) | (b) | (c) | (d) |

31
32
30
35
37
36
38 34
33
39

EP 0 277 170 B1

FIG.4.

FIG. 5

EP 0 277 170 B1